# EUROPÄISCHE PATENTANMELDUNG

(11) **EP 1 538 688 A2**
(43) Veröffentlichungstag der Anmeldung: **08.06.2005**
(21) Anmeldenummer: 04027888.9
(22) Anmeldetag: 24.11.2004
(51) Int. Cl.: H01M 8/06, H01M 8/04

(54) **System und Verfahren zum Umsetzen von Brennstoff und Oxidationsmittel zu Reformat**

(30) Priorität: 27.11.2003 DE 10355494
(71) Anmelder: Webasto AG, 82131 Stockdorf (DE)
(72) Erfinder: Kah, Stefan, 17033 Neubrandenburg (DE)

(57) **Zusammenfassung**

Die Erfindung betrifft ein System zum Umsetzen von Brennstoff und Oxidationsmittel zu Reformat mit einem Reformer (10) der eine erste Reaktionszone (12) aufweist, der Brennstoff (14) und Oxidationsmittel (16) zuführbar ist, und eine zweite Reaktionszone (18) aufweist, der aus der ersten Reaktionszone (12) ausgetretenes Produktgas (20) und Oxidationsmittel (16) zuführbar ist.

Erfindungsgemäß ist vorgesehen, dass Mittel zum Abführen (22, 24) von in der ersten Reaktionszone (12) erzeugter Reaktionswärme vor dem Eintritt des Produktgases (20) in die zweite Reaktionszone (18) vorgesehen sind.

Die Erfindung betrifft weiterhin ein Verfahren zum Umsetzen von Brennstoff und Oxidationsmittel zu Reformat sowie einen Reformer.

## Beschreibung

Die Erfindung betrifft ein System zum Umsetzen von Brennstoff und Oxidationsmittel zu Reformat, mit einem Reformer, der eine erste Reaktionszone aufweist, der Brennstoff und Oxidationsmittel zuführbar ist, und eine zweite Reaktionszone aufweist, der aus der ersten Reaktionszone ausgetretenes Produktgas und Oxidationsmittel zuführbar ist.

Die Erfindung betrifft weiterhin ein Verfahren zum Umsetzen von Brennstoff und Oxidationsmittel zu Reformat durch einen Reformer, wobei der Reformer eine erste Reaktionszone aufweist, der Brennstoff und Oxidationsmittel zugeführt wird, und eine zweite Reaktionszone aufweist, der aus der ersten Reaktionszone ausgetretenes Produktgas und Oxidationsmittel zugeführt wird.

Die Verwendung von Brennstoffzellen im Kraftfahrzeugbereich zur Erzeugung elektrischer Energie gewinnt zunehmend an Bedeutung. Insbesondere wird die Weiterentwicklung von Hilfsenergiequellen (APU, "Auxiliary Power Unit") angestrebt, um mit diesen Einheiten Energie in das Bordnetz des Fahrzeugs einzuspeisen und auf diese Weise eine vom Betrieb des Verbrennungsmotors unabhängige Versorgung von in dem Fahrzeug angeordneten elektrischen Verbrauchern mit Strom zu ermöglichen.

Zur Erzeugung dieser elektrischen Energie werden häufig SOFC-Brennstoffzellen ("Solid Oxide Fuel Cell") verwendet, denen ein aus einem Reformer austretendes Produktgas zum Zwecke der Erzeugung elektrischer Energie zugeführt wird. Als Reformierungsart im Reformer kommt häufig die partielle Oxidation (POX) zum Einsatz, wobei diese thermisch (TPOX, "Thermal Partial Oxidation") oder unter Einsatz eines Katalysators (CPOX, "Catalytic Partial Oxidation") durchgeführt werden kann. In jedem Fall entsteht bei der partiellen Oxidation Reaktionswärme, welcher bei der Auslegung des Reformers und sonstiger Komponenten Rechnung getragen werden muss. Es muss darauf geachtet werden, dass die entstehenden Temperaturen unterhalb von Temperaturobergrenzen liegen, die insbesondere durch die beteiligten Komponenten und Materialien festgelegt werden.

Ein gangbarer Weg zur Berücksichtigung dieser Temperaturobergrenzen ist die Wärmeauskopplung aus dem Reformer nach dem Austritt des Produktgases aus dem Reformer, wie es beispielsweise in der US 6,562,496 B2 angegeben ist. Auf diese Weise können insbesondere dem Reformer nachgeordnete Komponenten vor hohen Temperaturen geschützt werden; die Gefahr einer Beschädigung eines Katalysators beziehungsweise der Reformerwerkstoffe kann jedoch nicht vollständig ausgeschlossen werden.

Der Erfindung liegt die Aufgabe zugrunde, gattungsgemäße Systeme und Verfahren in der Weise weiterzubilden, dass die Probleme des Standes der Technik zumindest teilweise überwunden werden und insbesondere die Gefahr eine Beschädigung von Systemkomponenten minimiert wird.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen System dadurch auf, dass Mittel zum Abführen von in der ersten Reaktionszone erzeugter Reaktionswärme vor dem Eintritt des Produktgases in die zweite Reaktionszone vorgesehen sind. In der Regel ist die Nettowärmeproduktion in der ersten Reaktionszone höher als in der nachfolgenden zweiten Reaktionszone. Es bietet sich daher an, die aufgrund der Nettowärmeproduktion stattfindende Temperaturerhöhung durch die Abführung von der in der ersten Reaktionszone entstehenden Wärme zu begrenzen. Insbesondere wird der zweiten Reaktionszone ein Gas zur weiteren Reaktion zugeführt, aus dem Reaktionswärme aus der ersten Reaktionszone abgeführt wurde, so dass eine weitere Reaktion des Gases in der zweiten Reaktionszone im Hinblick auf die weitere Temperaturerhöhung unproblematisch realisiert werden kann.

Besonders nützlich ist es, dass die Mittel zum Abführen von Reaktionswärme einen Wärmeübertrager zum Abführen von Wärme aus der ersten Reaktionszone umfassen. Auf diese Weise können speziell die der ersten Reaktionszone zugeordneten Komponenten vor überhöhten Temperaturen geschützt werden.

Insbesondere ist es weiterhin nützlich, dass die Mittel zum Abführen von Reaktionswärme einen Wärmeübertrager zum Abführen von Wärme aus dem aus der ersten Reaktionszone ausgetretenen Produktgas umfassen. Diese Maßnahme kann einzeln oder zusätzlich die Temperaturbelastung von der ersten Reaktionszone nachgeordneten Komponenten herabsetzen, das heißt insbesondere die Temperaturbelastung der zweiten Reaktionszone.

Die Erfindung ist in vorteilhafter Weise dadurch weitergebildet, dass die Mittel zum Abführen von Reaktionswärme Kathodenluft einer dem System zugeordneten Brennstoffzelle als Kühlmedium verwenden können. Hierdurch wird in vorteilhafter Weise einerseits Reaktionswärme abgeführt und andererseits die Kathodenluft erwärmt, so dass die für den Betrieb einer SOFC-Brennstoffzelle erforderlichen hohen Temperaturen erreicht werden.

Weiterhin ist die Erfindung in bevorzugter Weise so ausgebildet, dass die Mittel zum Abführen von Reaktionswärme ein Kühlmedium aus einem Kühlkreislauf, zum Beispiel eines Verbrennungsmotors, verwenden können. Beim Einsatz des Systems in einem Kraftfahrzeug lässt sich somit eine Verzahnung des Systems mit sonstigen Kraftfahrzeugeigenschaften nutzen.

Weiterhin ist es vorteilhaft, dass die Mittel zum Abführen von Reaktionswärme als Kühlmedium Brennstoff und/oder Oxidationsmittel vor dem Eintritt in den Reformer verwenden können. Dies hat den Vorteil, dass die in den Reformer eintretenden Substanzen vorgewärmt werden und dabei gleichzeitig die Reaktionswärme zur Temperaturerniedrigung in vorteilhafter Weise abführen.

Die Erfindung ist in nützlicher Weise dadurch weitergebildet, dass eine Oxidationsmittelzuführung vorgesehen ist, die einen Strömungsteiler aufweist, um das zugeführte Oxidationsmittel auf die erste und die zweite Reaktionszone aufzuteilen. Das Oxidationsmittel, das heißt in der Regel die Luft, kann somit über eine einheitliche Zuführung eingebracht werden, wobei die Aufteilung für die verschiedenen Reaktionszonen mittels eines Strömungsteilers erfolgt. Die für die Reformierungsvorgänge erforderliche Luftmenge kann somit in Abhängigkeit der erwünschten Eigenschaften des Reformats und in Abhängigkeit des zur Verfügung gestellten Brennstoffs zentral eingestellt werden.

Weiterhin ist es nützlich, dass eine Gemischbildungszone vorgesehen ist, der das Oxidationsmittel für die erste Reaktionszone und der Brennstoff zuführbar sind, und dass der zweiten Reaktionszone das Oxidationsmittel direkt zuführbar ist. Im Zusammenhang mit der Gemischbildungszone bestehen auf der Grundlage der vorliegenden Erfindung die Vorteile, dass sich aufgrund der Aufteilung des zugeführten Oxidationsmittels die Verweilzeit des Oxidationsmittels und des Brennstoffs in der Gemischbildungszone erhöht. Dies begünstigt den Verdampfungsprozess flüssiger Brennstoffe in der Gemischbildungszone.

Die Erfindung betrifft weiterhin einen Reformer zur Verwendung in einem erfindungsgemäßen System. Auf der Grundlage eines solchen Reformers, der sich insbesondere durch die Aufteilung seines Reaktionsbereichs in mindestens zwei Reaktionszonen und durch eine Abführung von in der ersten Reaktionszone entstehender Wärme auszeichnet, können die vorgenannten Vorteile und Besonderheiten des erfindungsgemäßen Systems realisiert werden.

Die Erfindung baut auf den gattungsgemäßen Verfahren dadurch auf, dass in der ersten Reaktionszone erzeugte Reaktionswärme vor dem Eintritt des Produktgases in die zweite Reaktionszone abgeführt wird. Auf diese Weise werden die Vorteile und Besonderheiten des erfindungsgemäßen Systems auch im Rahmen eines Verfahrens umgesetzt. Dies gilt auch für die nachfolgend angegebenen besonders bevorzugten Ausführungsformen des erfindungsgemäßen Verfahrens.

Dieses ist nützlicherweise so ausgebildet, dass die Reaktionswärme direkt aus der ersten Reaktionszone abgeführt wird.

Zusätzlich oder alternativ kann auch vorgesehen sein, dass die Reaktionswärme aus dem aus der ersten Reaktionszone ausgetretenen Produktgas abgeführt wird.

In diesem Zusammenhang ist es nützlich, dass die Reaktionswärme durch Kathodenluft einer dem System zugeordneten Brennstoffzelle abgeführt wird.

Das Verfahren kann aber auch so ausgebildet sein, dass die Reaktionswärme durch ein Kühlmedium aus einem Kühlkreislauf eines Verbrennungsmotors abgeführt wird.

Ebenso kann vorgesehen sein, dass die Reaktionswärme durch Brennstoff und/oder Oxidationsmittel vor dem Eintritt in den Reformer abgeführt wird.

Es ist weiterhin nützlich, dass das zugeführte Oxidationsmittel auf die erste und die zweite Reaktionszone aufgeteilt wird.

Das erfindungsgemäße Verfahren ist in besonders vorteilhafter Weise dadurch weitergebildet, dass das Oxidationsmittel für die erste Reaktionszone und der Brennstoff einer Gemischbildungszone zugeführt werden und dass der zweiten Reaktionszone das Oxidationsmittel direkt zugeführt wird.

In diesem Zusammenhang ist es von besonderem Vorteil, dass eine in Abhängigkeit der erwünschten Reformierungsvorgänge vorgegebene Oxidationsmittelmenge pro Zeit eingesetzt wird, dass ein Teil der vorgegebenen Oxidationsmittelmenge in Abhängigkeit vorgegebener Temperaturobergrenzen der ersten Reaktionszone zugeführt wird und dass der verbleibende Teil der vorgegebenen Oxidationsmittelmenge der zweiten Reaktionszone zugeführt wird.

Der Erfindung liegt die Erkenntnis zugrunde, dass durch die Aufteilung des Reaktionsbereiches eines Reformers in mindestens zwei Reaktionszonen die Gefahr einer Überschreitung von Temperaturobergrenzen verringert wird, indem aus der ersten Reaktionszone oder aus dem aus der ersten Reaktionszone ausgetretenen Produktgas Reaktionswärme abgeführt wird. Die Erfindung ist insbesondere im Zusammenhang mit Reformierungsvorgängen zur Bereitstellung von Reformat für eine Brennstoffzelle nützlich. Die Erfindung ist jedoch auch für zahlreiche andere Anwendungen geeignet, bei denen ein Produktgas aus einem Reformer zum Einsatz kommen kann, beispielsweise im Zusammenhang mit Automobilabgaskatalysatoren, Automobilantrieben, etc. Die Erfindung wurde am Beispiel der Reformierungsart der partiellen Oxidation erläutert.

Die Erfindung ist jedoch auch für andere Reformierungsarten mit einer Nettowärmeproduktion einsetzbar.

Die Erfindung wird nun mit Bezug auf die begleitenden Zeichnungen anhand bevorzugter Ausführungsform beispielhaft erläutert.

Dabei zeigt:
- Figur 1: eine schematische Darstellung eines erfindungsgemäßen Systems und
- Figur 2: ein Flussdiagramm eines erfindungsgemäßen Verfahrens.

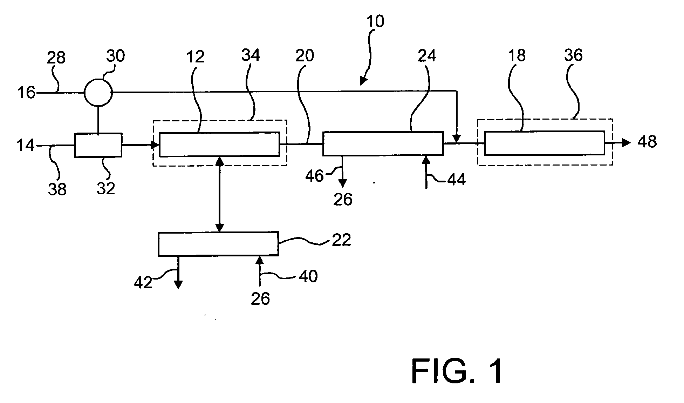

Figur 1 zeigt eine schematische Darstellung eines erfindungsgemäßen Systems. Der Reformer 10 umfasst eine erste Reaktionszone 12 und eine zweite Reaktionszone 18. Die Reaktionszone 12 ist von einer Umhausung 34 umgeben. Die Reaktionszone 18 ist von einer Umhausung 36 umgeben. Die erste Reaktionszone 12 steht im thermischen Kontakt mit einem Wärmeübertrager 22. Weiterhin ist zwischen der ersten Reaktionszone 12 und der zweiten Reaktionszone 18 ein Wärmeübertrager 24 angeordnet. Eine Oxidationsmittelzuführung 28 mit einem Strömungsteiler 30 ist vorgesehen, wobei der stromabwärts vom Strömungsteiler angeordnete Teil der Oxidationsmittelzuführung 28 einerseits in eine Gemischbildungszone 32 und andererseits direkt in die Reaktionszone 18 mündet. In die Gemischbildungszone 32 mündet weiterhin eine Brennstoffzuführung 38. Der Wärmeübertrager 22 ist mit einem Kühlmittelvorlauf 40 und einem Kühlmittelrücklauf 42 ausgestattet. Ebenso ist der Wärmeübertrager 24 mit einem Kühlmittelvorlauf 44 und einem Kühlmittelrücklauf 46 ausgestattet.

Das System gemäß Figur 1 arbeitet wie folgt. Über die Oxidationsmittelzuführung 28 und den Strömungsteiler 30 wird ein Teil des zugeführten Oxidationsmittels 16 der Gemischbildungszone 32 zugeführt. Dieser wird weiterhin über eine Brennstoffzuführung 38 Brennstoff 14, beispielsweise Benzin oder Dieselkraftstoff zugeführt. In der Gemischbildungszone 32 erfolgt eine Verdampfung und eine Vermischung des Oxidationsmittels 16 mit dem Brennstoff 14. Das Oxidationsmittel besteht vorzugsweise aus Luft, die optional mit wasserhaltigen beziehungsweise wasserfreisetzenden Medienströmen vermischt ist. Dabei kann es sich beispielsweise um Produktgase aus Verbrennungsprozessen handeln, die zum Beispiel im Anodenraum der Brennstoffzelle und/oder in einem Brenner erzeugt wurden. Ebenfalls können motorische Abgase verwendet werden. Das Gemisch wird nachfolgend der ersten Reaktionszone 12 zugeführt, wo eine partielle exotherme Oxidation des Brennstoffs 14 erfolgt, wobei die ablaufenden Reaktionen von der Menge des zur Verfügung gestellten Oxidationsmittels 16 abhängen. Die in der Reaktionszone 12 erzeugte Reaktionswärme wird teilweise über den Wärmeübertrager 22 mittels eines Kühlmediums 26 abgeführt. Das Kühlmedium 26, welches zum Beispiel Kathodenluft, Kühlwasser des Kraftfahrzeugmotors oder auch Oxidationsmittel beziehungsweise Brennstoff sein kann, wird über den Kühlmittelvorlauf 40 dem Wärmeübertrager 22 zugeführt und über den Kühlmittelrücklauf 42 wieder abgeführt. Aus der Reaktionszone 12 austretendes Produktgas wird einem weiteren Wärmeübertrager 24 zugeführt. In dem Produktgas vorhandene Wärme wird wiederum über ein Kühlmittel 26 abgeführt, wobei das Kühlmittel über einen Kühlmittelvorlauf 44 zugeführt und über einen Kühlmittelrücklauf 46 abgeführt wird. Als Kühlmittel können dieselben Kühlmittel wie beim Wärmeübertrager 22 verwendet werden. Das gekühlte Produktgas 20 wird nun der zweiten Reaktionszone 18 zugeführt, der weiterhin der im Strömungsteiler verbleibende, das heißt nicht der Gemischbildungszone 32 zugeführte Teil des Oxidationsmittels 16 zugeführt wird. In der zweiten Reaktionszone 18 findet nun eine der verbleibenden Menge des Oxidationsmittels 16 entsprechende weitere Reaktion des Produktgases 20 mit dem Oxidationsmittel 16 statt. Das fertige Reformat 48 kann dann aus der zweiten Reaktionszone 18 abgeführt und der weiteren Verwendung, beispielsweise einer Brennstoffzelle zugeführt werden.

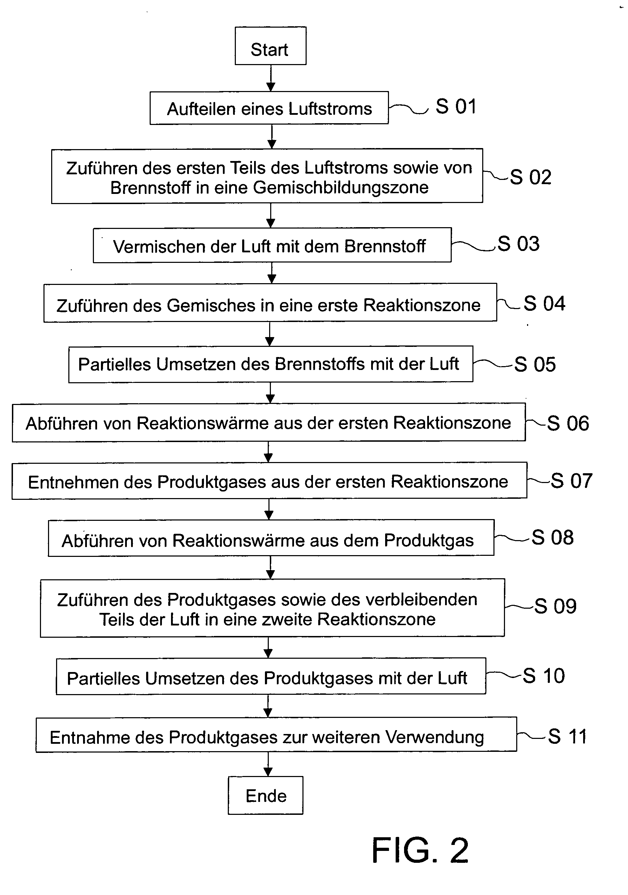

Figur 2 zeigt ein Flussdiagramm eines erfindungsgemäßen Verfahrens. In Schritt S01 wird ein Luftstrom durch einen Strömungsteiler in einen ersten Teil und einen zweiten Teil aufgeteilt. In Schritt S02 wird der erste Teil des Luftstroms einer Gemischbildungszone zugeführt. Dieser Gemischbildungszone wird ebenso der zu oxidierende Brennstoff zugeführt. Der im Allgemeinen in flüssiger Form zugeführte Brennstoff verdampft in der Gemischbildungszone und vermischt sich in Schritt S03 mit der Luft. Das Gemisch wird gemäß Schritt S04 einer ersten Reaktionszone zugeführt, worin gemäß Schritt S05 ein partielles Umsetzen des Brennstoffs mit der Luft erfolgt. In Schritt S06 wird die in der ersten Reaktionszone erzeugte Reaktionswärme teilweise durch einen Wärmeübertrager abgeführt. In Schritt S07 wird das Produktgas aus der ersten Reaktionszone entnommen, und in Schritt S08 wird aus dem Produktgas weitere Reaktionswärme abgeführt. In Schritt S09 wird das Produktgas sowie der verbleibende zweite Teil der aus dem Strömungsteiler austretenden Luft einer zweiten Reaktionszone zugeführt. Hier erfolgt gemäß Schritt S10 ein weiteres partielles Umsetzen des Produktgases mit der Luft. In Schritt S11 kann dann das Produktgas zur weiteren Verwendung der zweiten Reaktionszone und damit dem Reformer entnommen werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Reformer
- 12: erste Reaktionszone
- 14: Brennstoff
- 16: Oxidationsmittel
- 18: zweite Reaktionszone
- 20: Produktgas
- 22: Wärmeübertrager
- 24: Wärmeübertrager
- 26: Kühlmedium
- 28: Oxidationsmittelzuführung
- 30: Strömungsteiler
- 32: Gemischbildungszone
- 34: Umhausung
- 36: Umhausung
- 38: Brennstoffzuführung
- 40: Kühlmittelvorlauf
- 42: Kühlmittelrücklauf
- 44: Kühlmittelvorlauf
- 46: Kühlmittelrücklauf
- 48: Reformat

## Patentansprüche

1. System zum Umsetzen von Brennstoff und Oxidationsmittel zu Reformat mit einem Reformer (10) der
- eine erste Reaktionszone (12) aufweist, der Brennstoff (14) und Oxidationsmittel (16) zuführbar ist, und
- eine zweite Reaktionszone (18) aufweist, der aus der ersten Reaktionszone (12) ausgetretenes Produktgas (20) und Oxidationsmittel (16) zuführbar ist,
**dadurch gekennzeichnet, dass** Mittel zum Abführen (22, 24) von in der ersten Reaktionszone (12) erzeugter Reaktionswärme vor dem Eintritt des Produktgases (20) in die zweite Reaktionszone (18) vorgesehen sind.

2. System nach Anspruch 1, **dadurch gekennzeichnet, dass** die Mittel zum Abführen von Reaktionswärme einen Wärmeübertrager (22) zum Abführen von Wärme aus der ersten Reaktionszone (12) umfassen.

3. System nach Anspruch 1 oder 2, **dadurch gekennzeichnet, dass** die Mittel zum Abführen von Reaktionswärme einen Wärmeübertrager (24) zum Abführen von Wärme aus dem aus der ersten Reaktionszone (12) ausgetretenen Produktgas (20) umfassen.

4. System nach einem der vorangehenden Ansprüche, **dadurch gekennzeichnet, dass** die Mittel (22, 24) zum Abführen von Reaktionswärme Kathodenluft einer dem System zugeordneten Brennstoffzelle als Kühlmedium (26) verwenden können.

5. System nach einem der vorangehenden Ansprüche, **dadurch gekennzeichnet, dass** die Mittel (22, 24) zum Abführen von Reaktionswärme ein Kühlmedium (26) aus einem Kühlkreislauf eines Verbrennungsmotors verwenden können.

6. System nach einem der vorangehenden Ansprüche, **dadurch gekennzeichnet, dass** die Mittel (22, 24) zum Abführen von Reaktionswärme als Kühlmedium (26) Brennstoff und/oder Oxidationsmittel vor dem Eintritt in den Reformer (10) verwenden können.

7. System nach einem der vorangehenden Ansprüche, **dadurch gekennzeichnet, dass** eine Oxidationsmittelzuführung (28) vorgesehen ist, die einen Stömungsteiler (30) aufweist, um das zugeführte Oxidationsmittel auf die erste (12) und die zweite Reaktionszone (18) aufzuteilen.

8. System nach einem der vorangehenden Ansprüche, **dadurch gekennzeichnet,**
- **dass** eine Gemischbildungszone (32) vorgesehen ist, der das Oxidationsmittel (16) für die erste Reaktionszone (12) und der Brennstoff (14) zuführbar sind, und
- **dass** der zweiten Reaktionszone (18) das Oxidationsmittel (16) direkt zuführbar ist.

9. Reformer zur Verwendung in einem System nach einem der vorangehenden Ansprüche.

10. Verfahren zum Umsetzen von Brennstoff (14) und Oxidationsmittel (16) zu Reformat durch einen Reformer (10), wobei der Reformer (10) eine erste Reaktionszone (12) aufweist, der Brennstoff (14) und Oxidationsmittel (16) zugeführt wird, und eine zweite Reaktionszone (18) aufweist, der aus der ersten Reaktionszone (12) ausgetretenes Produktgas (20) und Oxidationsmittel (16) zugeführt wird, **dadurch gekennzeichnet, dass** in der ersten Reaktionszone (12) erzeugte Reaktionswärme vor dem Eintritt des Produktgases (20) in die zweite Reaktionszone (18) abgeführt wird.

11. Verfahren nach Anspruch 10, **dadurch gekennzeichnet, dass** die Reaktionswärme direkt aus der ersten Reaktionszone (12) abgeführt wird.

12. Verfahren nach Anspruch 10 oder 11, **dadurch gekennzeichnet, dass** die Reaktionswärme aus dem aus der ersten Reaktionszone (12) ausgetretenen Produktgas (20) abgeführt wird.

13. Verfahren nach einem der Ansprüche 10 bis 12, **dadurch gekennzeichnet, dass** die Reaktionswärme durch Kathodenluft einer dem System zugeordneten Brennstoffzelle abgeführt wird.

14. Verfahren nach einem der Ansprüche 10 bis 13, **dadurch gekennzeichnet, dass** die Reaktionswärme durch ein Kühlmedium (26) aus einem Kühlkreislauf eines Verbrennungsmotors abgeführt wird.

15. Verfahren nach einem der Ansprüche 10 bis 14, **dadurch gekennzeichnet, dass** die Reaktionswärme durch Brennstoff (14) und/oder Oxidationsmittel (16) vor dem Eintritt in den Reformer abgeführt wird.

16. Verfahren nach einem der Ansprüche 10 bis 15, **dadurch gekennzeichnet, dass** das zugeführte Oxidationsmittel (16) auf die erste und die zweite Reaktionszone (12, 18) aufgeteilt wird.

17. Verfahren nach einem der Ansprüche 10 bis 16, **dadurch gekennzeichnet,**
- **dass** das Oxidationsmittel (16) für die erste Reaktionszone (12) und der Brennstoff (14) einer Gemischbildungszone zugeführt werden und
- **dass** der zweiten Reaktionszone (18) das Oxidationsmittel (16) direkt zugeführt wird.

18. Verfahren nach einem der Ansprüche 10 bis 17, **dadurch gekennzeichnet,**
- **dass** eine in Abhängigkeit der erwünschten Reformierungsvorgänge vorgegebene Oxidationsmittelmenge pro Zeit eingesetzt wird,
- **dass** ein Teil der vorgegebenen Oxidationsmittelmenge in Abhängigkeit vorgegebener Temperaturobergrenzen der ersten Reaktionszone (12) zugeführt wird und
- **dass** der verbleibende Teil der vorgegebenen Oxidationsmittelmenge der zweiten Reaktionszone (18) zugeführt wird.
